# EUROPÄISCHE PATENTSCHRIFT

(11) **EP 1 530 108 B1**
(45) Veröffentlichungstag und Bekanntmachung des Hinweises auf die Patenterteilung: **11.10.2006**
(21) Anmeldenummer: 04018082.0
(22) Anmeldetag: 30.07.2004
(51) Int. Cl.: G05B 19/418

(54) **Elektrisches/elektronisches Steuersystem**
Electric/electronic control system
Système de contrôle électrique/électronique

(30) Priorität: 08.11.2003 DE 10352286
(43) Veröffentlichungstag der Anmeldung: 11.05.2005
(73) Patentinhaber: INSTA ELEKTRO GmbH & Co. KG, 58511 Lüdenscheid (DE)
(72) Erfinder: Grosch, Volker Dipl.-Ing., 45549 Sprockhövel (DE); Grossen, Thomas Dipl.-Ing., 58239 Schwerte (DE); Nockemann, Frank, 58511 Lüdenscheid (DE); Schubert, Frank, 58791 Werdohl (DE)

(56) Entgegenhaltungen:
- EP-A- 0 235 559
- DE-A1- 10 002 931

## Beschreibung

Die vorliegende Erfindung geht von einem gemäß der Oberbegriffe der fünf Hauptansprüche konzipierten elektrischen/elektronischen Steuersystem aus.

Derartige elektrische/elektronische Steuersysteme sind in der Regel dafür vorgesehen, eine Vielzahl von in Gebäuden installierten Aktoren (Antriebe, Lampen, Fühler, Wächter usw.) und Bediengeräte (Schalter, Dimmer, Steller usw.) datentechnisch miteinander zu vernetzen und gegebenenfalls mit der notwendigen Betriebsspannung zu versorgen.

Eine ganze Reihe solcher elektrischer/elektronischer Steuersysteme, wie z. B: EIB, DMX, LAN usw., vorgesehen insbesondere für den Einsatz in Gebäuden, haben sich bereits seit mehreren Jahren erfolgreich in der Praxis bewährt. Bei diesen sogenannten Bussystemen besteht die Möglichkeit eine große Vielzahl von Aktoren bzw. von Bediengeräten miteinander zu vernetzen und somit komfortabel eine wunschgerechte Beeinflussung durchzuführen. Selbstredend sind solche elektrischen/elektronischen Steuersysteme bzw. Bussysteme sehr komplex aufgebaut, so dass die Projektierung und Inbetriebnahme recht aufwendig ist. Außerdem benötigen solche elektrischen/elektronischen Steuersysteme eine entsprechend umfangreiche anwendungsspezifische Software, damit eine funktionsgerechte Beeinflussung durchgeführt werden kann. Auch ist es bei solchen elektrischen/elektronischen Steuersystemen notwendig, jedem Aktor eine spezifische Adresse zuzuordnen. Oftmals muss die entsprechende Programmierung nach der Installation für jedes Gerät einzeln vorgenommen werden, was recht umständlich ist. Ein solches Steuer- bzw. Bussystem ist z. B. durch die EP 1 331 533 A2 vorbekannt.

Zudem ist durch die DE 196 16 411 A1 ein elektrisches/elektronisches Steuersystem gemäß Oberbegriffe der beiden Hauptansprüche bekannt geworden. Bei diesem elektrischen/elektronischen Steuersystem handelt es sich um eine Signalübertragungsvorrichtung in Verbindung mit einer Diebstahlüberwachungsanlage. Die Signalübertragungseinrichtung weist eine Haupteinheit und mehrere Untereinheiten auf, wobei die Untereinheiten als mit LEDs bestückten Fotokopplern ausgeführt sind. Die Untereinheiten sind untereinander und mit der einen Datenstrom sendenden Haupteinheit jeweils über zumindest eine Datenleitung und zwei Versorgungsleitungen verbunden, wobei von der Haupteinheit eine in Reihe geschaltete, mehrere Untereinheiten aufweisende Kette von Untereinheiten ausgeht, und wobei zumindest eine Untereinheit in der Kette vorhanden ist, die den von der Haupteinheit gesendeten Datenstrom zur internen Steuerung heranzieht und diesen Datenstrom verändert und den veränderten Datenstrom an die nachfolgende Untereinheit der Kette weitersendet. Wie schon erwähnt, ist diese Signalübertragungsvorrichtung zur Steuerung einer Diebstahlüberwachungsanlage vorgesehen. Des weiteren ist für diese Signalübertragungseinrichtung ausdrücklich beschrieben, dass die Datenweitergabe in der Kette in Form eines durch die Stationen selbst inhaltlich veränderten Datenstromes nur während einer Inbetriebnahmeprozedur für eine automatische Adressvergabe an die Stationen der Kette benutzt wird, wobei der laufende Datenstrom während des Betriebs Paketweise durch die Stationen der Kette so lange weitergegeben wird, bis bei Feststellen der Übereinstimmung eines Teils des Datenpaketes mit der jeweiligen Stationsadresse die Beeinflussung der Empfängerstation erfolgt.

Des weiteren ist durch die EP 0 235 559 A1 ein Bussystem unter anderem für Automatisierungsgeräte bekannt geworden, bei dem Peripheriebaugruppen in Reihe mit einem Zentralgerät geschaltet sind. Ein vom Zentralgerät ausgehender serieller Datenstrom durchläuft die Schnittstellenbausteine aller Peripheriebaugruppen und endet im Zentralgerät. Der Datenstrom dient unter anderem zur Steuerung von Eingabebaugruppen, wobei diese den Datenstrom durch umschreiben des fünften Bits ändern.

Außerdem ist durch die DE 100 02 931 A1 eine Steuerung für eine Industrienähmaschine mit einer im oder am Nähkopf angeordneten Motorsteuerung bekannt geworden. In einem besonderen Bedienteil ist eine Nähablaufsteuerung untergebracht, wobei Bedienteil und Motorsteuerung über eine bidirektionale Schnittstelle verbunden sind und wobei Solenoide und digitale Schalteingänge umfassende Aktoren, wie Fadenwischer, Fadenabschneider und dergleichen von der Steuerung angesteuert werden. Über die Motorsteuerung ist das Hoch- und Herunterlaufen und die Drehzahl des Motors steuerbar, wobei die Ansteuerung der Aktoren gesondert hiervon über einen seriellen Bus erfolgt und wobei der serielle Bus als BBOBI (Bit Bit Out Bit In) ausgebildet ist und eine Mehrzahl von jeweils einem Aktor zugeordneter Knoten-Schaltungsanordnungen umfasst. Zumindest eine Knoten-Schaltungsanordnung ist auf einer Leiterplatte angeordnet und umfasst einen Schalteingang sowie einen Ausgang für einen getakteten Solenoiden und einen Ausgang für eine Anzeige in Form einer LED.

Ausgehend von einer solchen Situation liegt der vorliegenden Erfindung die Aufgabe zugrunde, ein elektrisches/elektronisches Steuersystem für eine mit LED bestückten Aktoren versehene Beleuchtungsanlage zu schaffen, wobei zur Realisierung variantenreicher Funktionen der Beleuchtungsanlage die Art der datentechnischen Beeinflussung der Aktoren bereits durch Projektierung und Aufbau der Beleuchtungsanlage auf einfache Art und Weise festlegbar ist, ohne dass vor oder während der elektrischen Inbetriebnahme der Beleuchtungsanlage in irgendeiner Form Adressen für die mit LED bestückten Aktoren vergeben werden müssen.

Erfindungsgemäß wird diese Aufgabe durch die im Hauptanspruch angegebenen Merkmale gelöst.

Bei einer solchen Ausbildung ist besonders vorteilhaft, dass sich allein aufgrund der Positionierung von zwei verschiedenen Aktortypen in der Aktorenkette eine große Variantenvielfalt der Funktionen der Beleuchtungsanlage auf kostengünstige Art und Weise realisieren lässt, und dass sich die Adressierung der verschiedenen Aktoren automatisch bei der ersten Inbetriebnahme der Beleuchtungsanlage ergibt.

Weiterhin ist besonders vorteilhaft, dass sich die Funktionsvielfalt innerhalb einer Aktorenkette einfach auf kostengünstige Art und Weise erhöhen lässt, verwendet man zwei bzw. drei hinsichtlich der Verarbeitung des Datenstromes verschieden ausgebildete Aktortypen.

Weitere vorteilhafte Ausgestaltungen des erfindungsgemäßen Gegenstandes sind in den Unteransprüchen angegeben. Anhand mehrerer Blockschaltbilder sei die Erfindung im Prinzip näher erläutert. Dabei zeigen:
- Fig. 1:: prinziphaft ein erstes Ausführungsbeispiel eines solchen elektrischen/elektronischen Steuersystems;
- Fig. 2:: prinziphaft ein zweites Ausführungsbeispiel eines solchen elektrischen/elektronischen Steuersystems;
- Fig. 3:: prinziphaft einen in mehrere Datenpakete aufgeteilten ersten Datenstrom;
- Fig. 4:: prinziphaft ein erstes Anwendungsbeispiel eines solchen elektrischen/elektronischen Steuersystems unter Verwendung von vier Aktoren des ersten Aktortyps A und zwei Aktoren des dritten Aktortyps C in der zu beeinflussenden Aktorenkette;
- Fig. 5:: prinziphaft einen in mehrere Datenpakete aufgeteilten zweiten Datenstrom;
- Fig. 6:: prinziphaft ein zweites Anwendungsbeispiel eines solchen elektrischen/elektronischen Steuersystems unter Verwendung von zwei Aktoren des ersten Aktortyps A und einem Aktor des zweiten Aktortyps B und drei Aktoren des dritten Aktortyps C in der zu beeinflussenden Aktorenkette.

Wie aus den Figuren hervorgeht, besteht ein solches elektrisches/elektronisches Steuersystem im Wesentlichen aus mehreren mit LED bestückten Aktoren, wobei die Aktoren über eine Datenleitung 1 und zwei Versorgungsleitungen 2 mit einem einen Datenstrom D sendenden Steuermodul 3 in Verbindung stehen.

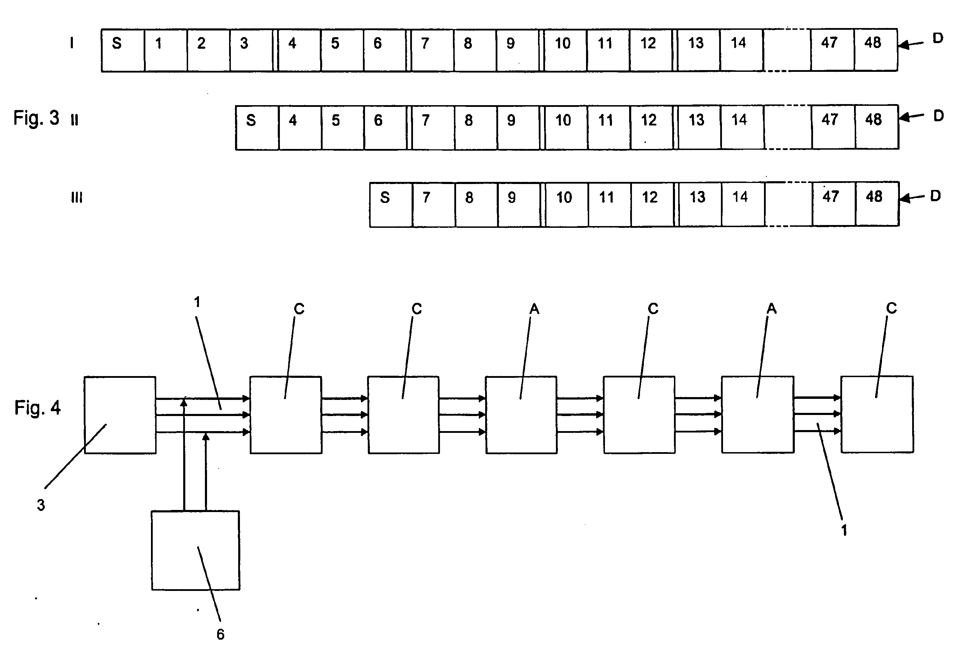

Wie des weiteren aus den Figuren hervorgeht, geht jeweils von einem Steuermodul 3 eine in Reihe geschaltete, jeweils mehrere Aktoren aufweisende Aktorenkette aus. Jeder Aktor verfügt dabei lediglich über einen Dateneingang 4 und einen, zum datentechnischen Anschluss des folgenden Aktors vorgesehenen Datenausgang 5. Wie bereits erwähnt, sind die Aktoren zusätzlich über zwei Versorgungsleitungen 2 miteinander verbunden. Je nach gewünschter bzw. für die Funktion notwendiger Funktionsvielfalt kann eine Aktorenkette entweder nur aus mehreren Aktoren des ersten Aktortyps A oder des zweiten Aktortyps B; oder aus zumindest einem Aktor des Aktortyps A und zumindest einem Aktor des zweiten Aktortyps B; oder aus zumindest einem Aktor des ersten Aktortyps A und zumindest einem Aktor des zweiten Aktortyps B und zumindest einem Aktor des dritten Aktortyps C bestehen. Wie insbesondere aus Figur 3 hervorgeht, ist der vom Steuermodul 3 gesendete Datenstrom D in mehrere Datenpakete P aufgeteilt. Jedes Datenpaket P weist drei Datenzellen Z mit unterschiedlichem Inhalt auf. Insgesamt weist der Datenstrom D zur bedarfsgerechten Beeinflussung der Aktoren 16 Datenpakete P mit je drei Datenzellen Z auf.

Der erste Aktortyp A zieht den vom Steuermodul 3 gesendeten, in mehrere Datenpakete P aufgeteilten Datenstrom D zur internen Verarbeitung heran, löscht jedoch dann das erste, aus drei Datenzellen Z bestehende Datenpaket P aus dem Datenstrom D heraus und sendet dann diesen verkürzten Datenstrom D, beginnend mit dem nächsten, ebenfalls drei Datenzellen Z aufweisenden Datenpaket P an den nächst folgenden Aktor der Aktorenkette weiter.

Der zweite Aktortyp B zieht den vom Steuermodul 3 gesendeten, in mehrere Datenpakete P aufgeteilten Datenstrom D zur internen Steuerung heran, schneidet dann jedoch das erste Datenpaket P vom Datenstrom D ab und hängt das abgeschnittene Datenpaket P an das Ende des Datenstromes D an und sendet den so veränderten Datenstrom D beginnend mit dem nächsten Datenpaket P an den nächst folgenden Aktor der Aktorenkette weiter.

Der dritte Aktortyp C zieht den vom Steuermodul 3 gesendeten, in mehrere Datenpakete P aufgeteilte Datenstrom D sowohl zur internen Verarbeitung heran und sendet diesen auch an den nächst folgenden Aktor der Aktorenkette unverändert weiter.

Um sicher zu stellen, dass auch der letzte Aktor einer Aktorenkette korrekt mit dem ihm zugeordneten Datenstrom D versorgt wird, bereiten alle Aktorentypen A, B, C diesen vor der Weitersendung an den nächst folgenden Aktor auf. Um die Steuersignale vom Steuermodul 3 bis zum Ende der Aktorenkette möglichst störungsfrei zu erhalten, wird die Datenaufbereitung durch eine neuerliche Erzeugung des seriellen Datenstromes D durch die Sendeeinheit der im Mikrocontroller des Aktors vorhandenen seriellen Schnittstelle bewerkstelligt. Dabei werden mit Ausnahme des herauszuschneidenden Datenpaketes P (erster Aktortyp A) die empfangenen Daten des Datenstromes D unverändert weitergesendet. Beim zweiten Aktortyp B wird lediglich die Reihenfolge der Datenpakete P in Bezug auf im Datenstrom D befindliche Startmarke S verändert, der Informationsgehalt der Datenpakete P des Datenstromes D bleibt unverändert. Die sich aus der neuerlichen Erzeugung des Datenstromes D ergebende Zeitverzögerung zwischen der Erzeugung eines Steuersignals im Steuermodul 3 und seiner Auswertung im letzten Aktor der Aktorenkette ist in aller Regel vernachlässigbar.

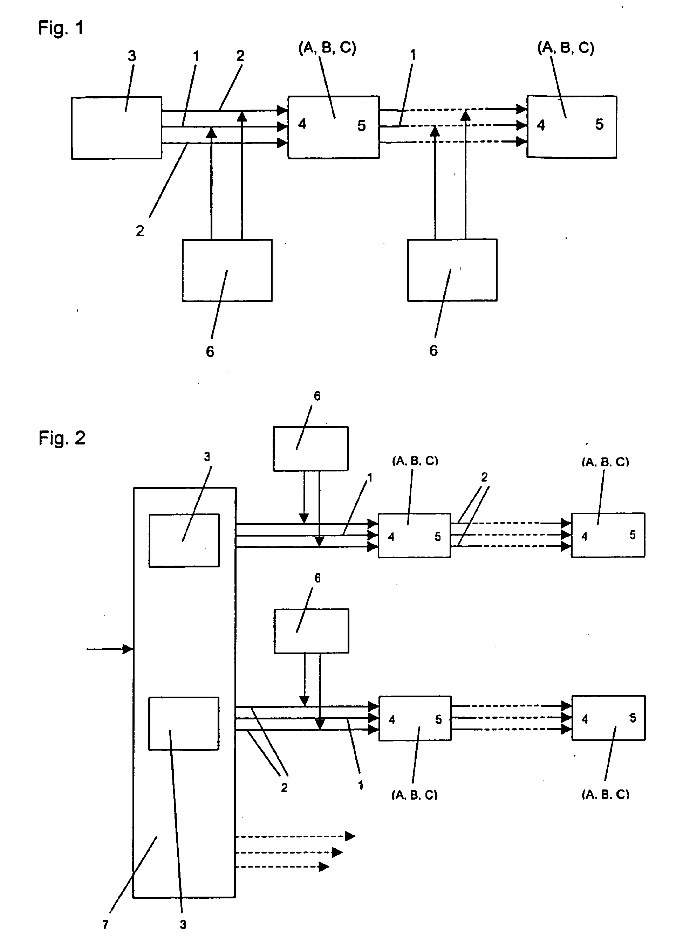

Wie insbesondere aus Fig. 1, Fig. 2 und Fig. 4 hervorgeht, erfolgt die Spannungsversorgung der Aktoren über mehrere, mit einer Spannungsquelle in Verbindung stehende Versorgungsweichen 6, welche in die Aktorenkette integriert sind.

Wie insbesondere aus Fig. 2 hervorgeht, ist der Aktorenkette ein Umsetzer 7 zugeordnet, welcher mehrere Steuermodule 3 beinhaltet. Der Umsetzer 7 steht mit einem anderen busbasierten Steuersystem, wie z. B. EIB, DMX, LAN usw. in Verbindung.

In Fig. 4 ist prinziphaft ein erstes Anwendungsbeispiel eines in Rede stehenden elektrische/elektronischen Steuersystems dargestellt. Die Aktorenkette besteht ausgehend vom Steuermodul 3 aus zwei Aktoren des dritten Aktorentyps C, dann folgt ein Aktor des ersten Aktorentyps A, dann wieder ein Aktor des dritten Aktorentyps C, ein zweiter Aktor des ersten Aktorentyps A und als letzter wiederum ein Aktor des dritten Aktorentyps C. Die Aktorenkette besteht also aus sechs Aktoren, wovon vier als dritter Aktorentyp C und zwei als erster Aktorentyp A ausgebildet sind. Zur Spannungsversorgung der Aktoren ist zwischen dem Steuermodul 3 und dem ersten Aktor eine Versorgungsweiche 6 in die Aktorenkette integriert.

Abgestimmt auf das in Fig. 4 dargestellte erste Anwendungsbeispiel ist in Fig. 3 prinziphaft ein in mehrere Datenpakete P aufgeteilter Datenstrom D dargestellt. Die Darstellung des Datenstromes D zeigt eine Unterteilung in I, II und III auf. Unter I ist der ursprünglich vom Steuermodul 3 gesendete Datenstrom D dargestellt. Unter II ist der erstmals durch den ersten Aktor des ersten Aktorentyps A verkürzte und unter III der am letzten Aktor der Aktorenkette auflaufende, zum zweiten mal durch den zweiten Aktor des ersten Aktorentyps A verkürzte Datenstrom D dargestellt.

Wie insbesondere aus Fig. 3 und Fig. 4 hervorgeht, geht vom Steuermodul 3 ein Datenstrom D aus, welcher unter I in Fig. 3 dargestellt ist und so vom ersten und zweiten Aktor, welche jeweils Aktoren vom dritten Aktorentyp C sind, intern verarbeitet und unverändert an den nächstfolgenden Aktor weitergegeben werden. Der dritte Aktor der Aktorenkette ist der erste Aktor des ersten Aktorentyps A. Er erhält vom zweiten Aktor (Aktorentyp C) den unveränderten Datenstrom D und zieht diesen auch zur internen Verarbeitung heran. Löscht dann jedoch das erste Datenpaket P aus dem Datenstrom D heraus und sendet den erstmals verkürzten Datenstrom D beginnend mit dem nächsten Datenpaket P an den nächstfolgenden Aktor, nämlich den vierten Aktor der Aktorenkette weiter. Der vierte Aktor der Aktorenkette erhält also den verkürzten Datenstrom D, so wie er unter II der Fig. 3 abgebildet ist. Weil der vierte Aktor der Aktorenkette wieder vom dritten Aktorentyp C ist, zieht dieser den erstmals verkürzten Datenstrom D sowohl zur internen Verarbeitung heran und sendet diesen dann auch unverändert an den nächstfolgenden, nämlich den fünften Aktor der Aktorenkette weiter. Weil der fünfte Aktor der Aktorenkette der zweite Aktor des ersten Aktorentyps A ist, verwendet dieser den unter II Fig. 3 abgebildeten, erstmals verkürzten Datenstrom D zur internen Steuerung, löscht jedoch dann wiederum das erste Datenpaket P aus dem Datenstrom D heraus und sendet den so zum zweiten mal verkürzten Datenstrom D beginnend mit dem nächsten Datenpaket P an den nächst folgenden, nämlich den letzten Aktor der Aktorenkette weiter.

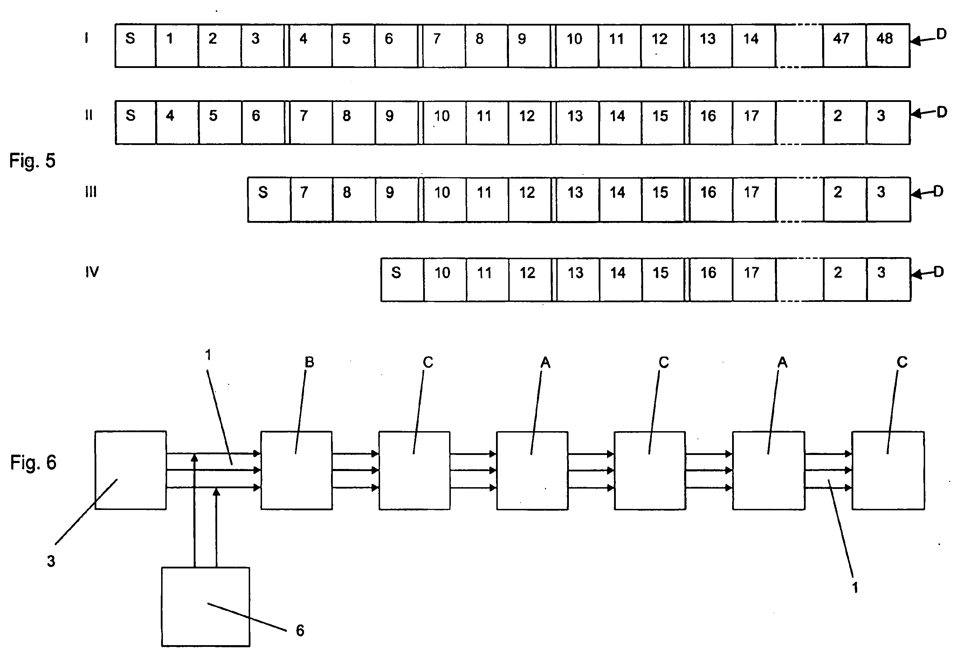

In Fig. 6 ist prinziphaft ein zweites Anwendungsbeispiel eines in Rede stehenden elektrische/elektronischen Steuersystems dargestellt. Die Aktorenkette besteht ausgehend vom Steuermodul 3 aus einem Aktor des zweiten Aktorentyps B, dann folgt ein Aktor des dritten Aktorentyps C, dann ein Aktoren des ersten Aktorentyps A, ein zweiter Aktor des dritten Aktorentyps C, dann ein zweiter Aktor des ersten Aktorentyps A und als letzter ein dritter Aktor des dritten Aktorentyps C. Die Aktorenkette besteht also aus sechs Aktoren, wovon drei als dritter Aktorentyp C, zwei als erster Aktorentyp A und einer als zweiter Aktorentyp B ausgebildet ist bzw. sind. Zur Spannungsversorgung der Aktoren ist zwischen dem Steuermodul 3 und dem ersten Aktor eine Versorgungsweiche 6 in die Aktorenkette integriert.

Abgestimmt auf das in Fig. 6 dargestellte zweite Anwendungsbeispiel ist in Fig. 5 prinziphaft ein in mehrere Datenpakete P aufgeteilter Datenstrom D dargestellt. Die Darstellung des Datenstromes D zeigt eine Unterteilung in I, II, III und IV auf. Unter I ist der ursprünglich vom Steuermodul 3 gesendete Datenstrom D dargestellt. Unter II ist der erstmals durch den Aktor des zweiten Aktorentyps B veränderte und unter III der zum ersten mal verkürzte, sowie unter IV der zum zweiten mal verkürzte am letzten Aktor der Aktorenkette auflaufende Datenstrom D dargestellt.

Wie insbesondere aus Fig. 5 und Fig. 6 hervorgeht, geht vom Steuermodul 3 ein Datenstrom D aus, welcher unter I in Fig. 5 dargestellt ist und so vom ersten Aktor, welcher vom zweiten Aktorentyp B ist, intern verarbeitet und dann entsprechend verändert an den nächstfolgenden Aktor weitergegeben wird. Dabei schneidet der Aktor vom zweiten Aktorentyp B das erste Datenpaket P vom Datenstrom D ab und hängt das abgeschnittene Datenpaket P an das Ende des Datenstromes D heran und sendet den Datenstrom D beginnend mit dem nächsten Datenpaket P an den nächstfolgenden Aktor der Aktorenkette weiter. Die Länge des Datenstromes D bzw. die Anzahl der Datenpakete P bleibt voll erhalten. Der zweite Aktor der Aktorenkette ist der erste Aktor des dritten Aktorentyps C. Er erhält vom ersten Aktor (Aktorentyp B) den entsprechend veränderten Datenstrom D und zieht diesen zur internen Verarbeitung heran und sendet diesen, wie unter II Fig. 5 abgebildet ist, an den dritten Aktor der Aktorenkette weiter. Der dritte Aktor der Aktorenkette ist der erste Aktor des ersten Aktorentyps A. Er erhält vom zweiten Aktor (Aktorentyp C) den unveränderten Datenstrom D und zieht diesen auch zur internen Verarbeitung heran.

Löscht dann jedoch das erste Datenpaket P aus dem Datenstrom D heraus und sendet den erstmals verkürzten Datenstrom D beginnend mit dem nächsten Datenpaket P an den nächstfolgenden Aktor, nämlich den vierten Aktor der Aktorenkette weiter. Der vierte Aktor der Aktorenkette erhält also den verkürzten Datenstrom D, so wie er unter III der Fig. 5 abgebildet ist. Weil der vierte Aktor der Aktorenkette wieder vom dritten Aktorentyp C ist, zieht dieser den erstmals verkürzten Datenstrom D sowohl zur internen Verarbeitung heran und sendet diesen dann auch unverändert an den nächstfolgenden, nämlich den fünften Aktor der Aktorenkette weiter. Weil der fünfte Aktor der Aktorenkette der zweite Aktor des ersten Aktorentyps A ist, verwendet dieser den unter III Fig. 5 abgebildeten, erstmals verkürzten Datenstrom D zur internen Steuerung, löscht jedoch dann wiederum das erste Datenpaket P aus dem Datenstrom D heraus und sendet den so zum zweiten mal verkürzten, unter IV Fig. 5 dargestellten Datenstrom D beginnend mit dem nächsten Datenpaket P an den nächst folgenden, nämlich den letzten Aktor der Aktorenkette weiter.

Ohne den erfinderischen Gedanken zu verlassen, ist es bei einem solchermaßen ausgebildeten Steuersystem selbstverständlich möglich, andersartig ausgebildete Aktoren, z. B. vorgesehen zur Beeinflussung von Halogenlampen, Leuchtstoffröhren, Glühlampen, Temperaturstellem usw. funktionsgerecht anzusteuern.

## Patentansprüche

1. Elektrisches/elektronisches Steuersystem zur Beeinflussung von mit LED bestückten Aktoren, wobei jeder Aktor mit seinem Vorgänger und mit gegebenenfalls einem Nachfolger jeweils über zumindest eine Datenleitung und zwei Versorgungsleitungen in Verbindung steht, wobei vom Steuermodul (3) zumindest eine in Kette geschaltete, mehrere Aktoren aufweisende Aktorenkette ausgeht, und wobei zumindest ein Aktor in der Aktorenkette vorhanden ist, der den vom Steuermodul (3) gesendeten Datenstrom (D) zur internen Steuerung heranzieht und der diesen Datenstrom verändert und den veränderten Datenstrom an den nachfolgenden Aktor der Aktorenkette weitersendet, **dadurch gekennzeichnet, dass** zumindest ein erster Aktortyp (A) in der Aktorenkette vorhanden ist, der immer das erste Datenpaket (P) des vom Steuermodul (3) gesendeten Datenstromes (D) verarbeitet und dieses Datenpaket (P) zur internen Steuerung heranzieht, jedoch dann das erste Datenpaket (P) aus dem Datenstrom (D) löscht und den Datenstrom (D) beginnend mit dem nächsten Datenpaket (P) an den nächst folgenden Aktor der Aktorenkette weitersendet.

2. Elektrisches/elektronisches Steuersystem zur Beeinflussung von mit LED bestückten Aktoren, wobei jeder Aktor mit seinem Vorgänger und gegebenenfalls mit einem Nachfolger jeweils über zumindest eine Datenleitung und zwei Versorgungsleitungen in Verbindung steht, wobei vom Steuermodul (3) zumindest eine in Kette geschaltete, mehrere Aktoren aufweisende Aktorenkette ausgeht, und wobei zumindest ein Aktor in der Aktorenkette vorhanden ist, der den vom Steuermodul (3) gesendeten Datenstrom (D) zur internen Steuerung heranzieht und der diesen Datenstrom verändert und den veränderten Datenstrom an den nachfolgenden Aktor der Aktorenkette weitersendet, **dadurch gekennzeichnet, dass** zumindest ein zweiter Aktortyp (B) in der Aktorenkette vorhanden ist, der immer das erste Datenpaket (P) des vom Steuermodul (3) gesendeten Datenstromes (D) verarbeitet und dieses Datenpaket (P) zur internen Steuerung heranzieht, jedoch dann das erste Datenpaket (P) vom Datenstrom (D) abschneidet und das abgeschnittene Datenpaket (P) an das Ende des Datenstromes (D) anhängt und den Datenstrom (D) beginnend mit dem nächsten Datenpaket (P) an den nächst folgenden Aktor der Aktorenkette weitersendet, und dass zumindest ein dritter Aktortyp (C) in der Aktorkette vorhanden ist, der immer das erste Datenpaket (P) des vom Vorgänger gesendeten Datenstromes (D) verarbeitet und dieses Datenpaket (P) sowohl zur internen Steuerung heranzieht, als auch an den nächst folgenden Aktor der Aktorenkette weitersendet.

3. Elektrisches/elektronisches Steuersystem nach Anspruch 1 wobei zumindest ein zweiter Aktortyp (B) in der Aktorenkette vorhanden ist, der immer das erste Datenpaket (P) des vom Vorgänger gesendeten Datenstroms (D) verarbeitet und dieses Datenpaket (P) zur internen Steuerung heranzieht, jedoch dann das erste Datenpaket (P) vom Datenstrom (D) abschneidet und das abgeschnittene Datenpaket (P) an das Ende des Datenstromes (D) anhängt und den Datenstrom (D) beginnend mit dem nächsten Datenpaket (P) an den nächst folgenden Aktor der Aktorenkette weitersendet.

4. Elektrisches/elektronisches Steuersystem nach Anspruch 1 wobei zumindest ein dritter Aktortyp (C) in der Aktorkette vorhanden ist, der immer das erste Datenpaket (P) des vom Vorgänger gesendeten Datenstromes (D) verarbeitet und dieses Datenpaket (P) sowohl zur internen Steuerung heranzieht, als auch an den nächst folgenden Aktor der Aktorenkette weitersendet.

5. Elektrisches/elektronisches Steuersystem nach Anspruch 1 wobei zumindest ein zweiter Aktortyp (B) in der Aktorenkette vorhanden ist, der immer das erste Datenpaket (P) des vom Vorgänger gesendeten Datenstromes (D) verarbeitet und dieses Datenpaket (P) zur internen Steuerung heranzieht, jedoch dann das erste Datenpaket (P) vom Datenstrom (D) abschneidet und das abgeschnittene Datenpaket (P) an das Ende des Datenstromes (D) anhängt und den Datenstrom (D) beginnend mit dem nächsten Datenpaket (P) an den nächst folgenden Aktor der Aktorenkette weitersendet, und dass zumindest ein dritter Aktortyp (C) in der Aktorkette vorhanden ist, der immer das erste Datenpaket (P) des vom Vorgänger gesendeten Datenstromes (D) verarbeitet und dieses Datenpaket (P) sowohl zur internen Steuerung heranzieht, als auch an den nächst folgenden Aktor der Aktorenkette weitersendet.

6. Elektrisches/elektronisches Steuersystem nach einem der Ansprüche 1 bis 5, **dadurch gekennzeichnet, dass** die verschiedenen Aktorentypen (A, B, C) jeweils lediglich über einen Dateneingang (4) und einen zum datentechnischen Anschluss des folgenden Aktors vorgesehenen Datenausgang (5) verfügen.

7. Elektrisches/elektronisches Steuersystem nach einem der Ansprüche 1 bis 6, **dadurch gekennzeichnet, dass** jedes Datenpaket (P) des vom Steuermodul (3) gesendeten Datenstromes (D) zumindest eine Datenzelle (Z) aufweist.

8. Elektrisches/elektronisches Steuersystem nach einem der Ansprüche 1 bis 7, **dadurch gekennzeichnet, dass** jedes Datenpaket (P) des vom Steuermodul (3) gesendeten Datenstromes (D) zumindest drei Datenzellen (Z) mit unterschiedlichen Inhalten aufweist.

9. Elektrisches/elektronisches Steuersystem nach einem der Ansprüche 1 bis 8, **dadurch gekennzeichnet, dass** in der Aktorenkette zumindest ein Aktor vom Aktortyp (A, B, C) vorhanden ist, durch den der Datenstrom (D) vor seiner Weitersendung an den nächst folgenden Aktor signaltechnisch aufbereitet wird.

10. Elektrisches/elektronisches Steuersystem nach einem der Ansprüche 1 bis 9, **dadurch gekennzeichnet, dass** zumindest ein Teil der Spannungsversorgung der angeschlossenen Aktoren vom Aktortyp (A, B, C), ausgehend von einer Spannungsquelle direkt über das Steuermodul (3) erfolgt.

11. Elektrisches/elektronisches Steuersystem nach einem der Ansprüche 1 bis 10, **dadurch gekennzeichnet, dass** zur Spannungsversorgung der Aktoren vom Aktortyp (A, B, C) zumindest eine, mit einer Spannungsquelle in Verbindung stehende Versorgungsweiche (6) in zumindest eine Aktorenkette integriert ist.

12. Elektrisches/elektronisches Steuersystem nach einem der Ansprüche 1 bis 11, **dadurch gekennzeichnet, dass** zumindest ein Aktor vom Aktortyp (A, B, C) über eine eigene Spannungsversorgung verfügt.

13. Elektrisches/elektronisches Steuersystem nach einem der Ansprüche 1 bis 12, **dadurch gekennzeichnet, dass** dem Steuermodul (3) zumindest ein Umsetzer (7) zugeordnet ist, welcher mit zumindest einem anderen busbasierten Steuersystem (EIB, DMX, LAN usw.) in Verbindung steht.

14. Elektrisches/elektronisches Steuersystem nach Anspruch 13, **dadurch gekennzeichnet, dass** an den zumindest einen Umsetzer (7) zumindest zwei Steuermodule (3) angeschlossen sind.

15. Elektrisches/elektronisches Steuersystem nach einem der Ansprüche 1 bis 14, **dadurch gekennzeichnet, dass** der Datenstrom (D) bezüglich seines ersten Datenpaketes (P) mit einer dieses kennzeichnenden Startmarke (S) versehen ist.

## Claims

1. Electrical / electronic control system for influencing actuators equipped with LEDs, with each actuator communicating by way of at least one data line and two supply lines with its predecessor and, if appropriate, with any successor, respectively, for which purpose at least one actuator chain comprising several actuators connected as a ladder network leads from the control module (3), and in which there is at least one actuator in the actuator chain that employs the data stream (D) transmitted by the control module (3) for internal control purposes and that changes this data stream and forwards this changed data stream to the subsequent actuator in the actuator chain, **characterised by** the fact that there is at least one first type of actuator (A) in the actuator chain which always processes the first data packet (P) of the data stream (D) output by the control module (3) and employs this data packet (P) for internal control purposes, though it then deletes the first data packet (P) from the data stream (D) and forwards the data stream (D), beginning with the next data packet (P), to the succeeding actuator in the actuator chain.

2. Electrical / electronic control system for influencing actuators equipped with LEDs, with each actuator communicating by way of at least one data line and two supply lines with its predecessor and, if appropriate, with any successor, respectively, for which purpose at least one actuator chain comprising several actuators connected as a ladder network leads from the control module (3), and in which there is at least one actuator in the actuator chain that employs the data stream (D) transmitted by the control module (3) for internal control purposes and that changes this data stream and forwards this changed data stream to the subsequent actuator in the actuator chain **characterised by** the fact that there is at least one second type of actuator (B) in the actuator chain which always processes the first data packet (P) of the data stream (D) output by the control module (3) and employs this data packet (P) for internal control purposes, though it then cuts off the first data packet (P) from the data stream (D) and attaches this cut-off data packet (P) to the end of the data stream (D) and forwards the data stream (D), beginning with the next data packet (P), to the succeeding actuator in the actuator chain, and that there is at least one third type of actuator (C) in the actuator chain which always processes the first data packet (P) of the data stream (D) transmitted by its predecessor and employs this data packet (P) for internal control purposes as well as forwarding it to the succeeding actuator in the actuator chain.

3. Electrical / electronic control system in accordance with Claim 1, in which there is at least one second type of actuator (B) in the actuator chain which always processes the first data packet (P) transmitted by its predecessor and employs this data packet (P) for internal control purposes, though it then cuts off the first data packet (P) from the data stream (D) and attaches the cut-off data packet (P) to the end of the data stream (D) and forwards the data stream (D), beginning with the following data packet (P), to the succeeding actuator in the actuator chain.

4. Electrical / electronic control system in accordance with Claim 1, in which there is at least one third type of actuator (C) in the actuator chain which always processes the first data packet (P) transmitted by its predecessor and employs this data packet (P) for internal control purposes as well as forwarding it to the succeeding actuator in the actuator chain.

5. Electrical / electronic control system in accordance with Claim 1, in which there is at least one second type of actuator (B) in the actuator chain which always processes the first data packet (P) of the data stream (D) transmitted by its predecessor and employs this data packet (P) for internal control purposes, though it then cuts off the first data packet (P) from the data stream (D) and attaches the cut-off data packet (P) to the end of the data stream (D) and forwards the data stream (D) to the succeeding actuator in the actuator chain, beginning with the following data packet (P), and that there is at least one third type of actuator (C) in the actuator chain which always processes the first data packet (P) of the data stream (D) transmitted by its predecessor and employs this data packet (P) for internal control purposes as well as forwarding it to the succeeding actuator in the actuator chain.

6. Electrical / electronic control system in accordance with any of Claims 1 to 5, **characterised by** the fact that each of the various types of actuator (A, B, C) only shows a data input (4) and a data output (5) provided for the purpose of data technical connection to the succeeding actuator.

7. Electrical / electronic control system in accordance with any of Claims 1 to 6, **characterised by** the fact that each data packet (P) of the data stream (D) transmitted by the control module (3) shows at least one data cell (Z).

8. Electrical / electronic control system in accordance with any of Claims 1 to 7, **characterised by** the fact that each data packet (P) of the data stream (D) transmitted by the control module (3) shows at least three data cells (Z) with different contents.

9. Electrical / electronic control system in accordance with any of Claims 1 to 8, **characterised by** the fact that there is at least one actuator of the actuator type (A, B, C) by means of which the data stream (D) is signal-technically processed prior to its being forwarded to the succeeding actuator.

10. Electrical / electronic control system in accordance with any of Claims 1 to 9, **characterised by** the fact that at least part of the power supply for the connected type of actuator (A, B, C) ensues from a voltage source directly above the control module (3).

11. Electrical / electronic control system in accordance with any of Claims 1 to 10, **characterised by** the fact that at least one supply switch (6) communicating with a voltage source is integrated into at least one actuator chain for the purpose of supplying the actuators of the actuator type (A, B, C) with power.

12. Electrical / electronic control system in accordance with any of Claims 1 to 11, **characterised by** the fact that at least one actuator of the actuator type (A, B, C) possesses its own power supply.

13. Electrical / electronic control system in accordance with any of Claims 1 to 12, **characterised by** the fact that at least one converter (7) is assigned to the control module (3) which communicates with at least one other bus-based control system (EIB, DMX, LAN, etc.).

14. Electrical / electronic control system in accordance with Claim 13, **characterised by** the fact that at least two control modules (3) are connected to the at least one converter (7).

15. Electrical / electronic control system in accordance with any of Claims 1 to 14, **characterised by** the fact that the data stream (D) is provided, in respect of its first data packet (P), with a start marker (S) identifying the same.

## Revendications

1. Système de commande électrique / électronique conçu pour influer sur des acteurs équipés de DEL, chaque acteur étant relié à son prédécesseur et, le cas échéant, à un successeur par l'intermédiaire de, respectivement, au moins une ligne de données et deux câbles d'alimentation ; dans ce dispositif, au moins une chaîne d'acteurs présentant plusieurs acteurs connectés en chaîne sort du module de commande (3) et au moins un des acteurs de la chaîne utilise le flux de données (2) émis par le module de commande (3) pour la commande interne, modifie ce flux de données et retransmet le flux de données modifié à l'acteur suivant de la chaîne d'acteurs. Ce système **présente les caractéristiques suivantes :** la chaîne d'acteurs comprend au moins un premier type d'acteur (A) qui traite toujours le premier paquet de données (P) du flux de données (D) émis par le module de commande (3) et utilise ce paquet de données (P) pour la commande interne, mais efface le premier paquet de données (P) du flux de données (D) et retransmet le flux de données (D) en commençant par le paquet de données suivant (P) à l'acteur immédiatement consécutif de la chaîne d'acteurs.

2. Système de commande électrique / électronique conçu pour influer sur des acteurs équipés de DEL, chaque acteur étant relié à son prédécesseur et, le cas échéant, à un successeur par l'intermédiaire de, respectivement, au moins une ligne de données et deux câbles d'alimentation ; dans ce dispositif, au moins une chaîne d'acteurs présentant plusieurs acteurs connectés en chaîne sort du module de commande (3) et au moins un des acteurs de la chaîne utilise le flux de données (D) émis par le module de commande (3) pour la commande interne, modifie ce flux de données et retransmet le flux de données modifié à l'acteur suivant de la chaîne d'acteurs. Ce système **présente les caractéristiques suivantes :** la chaîne d'acteurs comprend au moins un deuxième type d'acteur (B) qui traite toujours le premier paquet de données (P) du flux de données (D) émis par le module de commande (3) et utilise ce paquet de données (P) pour la commande interne, mais retranche le premier paquet de données (P) du flux de données (D), attache le paquet de données retranché (P) à l'extrémité du flux de données (D) et, en commençant avec le paquet de données suivant (P), retransmet le flux de données (D) à l'acteur immédiatement consécutif de la chaîne d'acteurs ; la chaîne d'acteurs contient au moins un troisième type d'acteur (C) qui traite toujours le premier paquet de données (P) du flux de données (D) émis par le prédécesseur, utilise ce paquet de données (P) pour la commande interne et le retransmet également à l'acteur immédiatement consécutif de la chaîne d'acteurs.

3. Système de commande électrique / électronique selon la revendication 1, tel que la chaîne d'acteurs comprenne au moins un deuxième type d'acteur (B) qui traite toujours le premier paquet de données (P) du flux de données (D) émis par le prédécesseur et utilise ce paquet de données (P) pour la commande interne, mais retranche ensuite le premier paquet de données (P) du flux de données (D), attache le paquet de données retranché (P) à l'extrémité du flux de données (D) et, en commençant avec le paquet de données suivant (P), retransmet le flux de données (D) à l'acteur immédiatement consécutif de la chaîne d'acteurs.

4. Système de commande électrique / électronique selon la revendication 1, tel que la chaîne d'acteurs comprenne au moins un troisième type d'acteur (C) qui traite toujours le premier paquet de données (P) du flux de données (D) émis par le prédécesseur, utilise ce paquet de données (P) pour la commande interne et le retransmette également à l'acteur immédiatement consécutif de la chaîne d'acteurs.

5. Système de commande électrique / électronique selon la revendication 1, tel que la chaîne d'acteurs comprenne au moins un deuxième type d'acteur (B) qui traite toujours le premier paquet de données (P) du flux de données (D) émis par le prédécesseur et utilise ce paquet de données (P) pour la commande interne, mais retranche ensuite le premier paquet de données (P) du flux de données (D), attache le paquet de données retranché (P) à l'extrémité du flux de données (D) et, en commençant avec le paquet de données suivant (P), retransmet le flux de données (D) à l'acteur immédiatement consécutif de la chaîne d'acteurs ; ce système est également conçu de telle sorte que la chaîne d'acteurs comprenne au moins un troisième type d'acteur (C) qui traite toujours le premier paquet de données (P) du flux de données (D) émis par le prédécesseur, utilise ce paquet de données (P) pour la commande interne et le retransmette également à l'acteur immédiatement consécutif de la chaîne d'acteurs.

6. Système de commande électrique / électronique selon une des revendications 1 à 5 et **présentant les caractéristiques suivantes :** les différents types d'acteur (A, B, C) disposent chacun uniquement d'une entrée de données (4) et d'une sortie de données (5) prévue pour le raccordement informatique de l'acteur suivant.

7. Système de commande électrique / électronique selon une des revendications 1 à 6 et **présentant les caractéristiques suivantes :** chacun des paquets de données (P) du flux de données (D) émis par le module de commande (3) présente au moins une cellule de données (Z).

8. Système de commande électrique / électronique selon une des revendications 1 à 7 et **présentant les caractéristiques suivantes :** chacun des paquets de données (P) du flux de données (D) émis par le module de commande (3) présente au moins trois cellules de données (Z) à contenus différents.

9. Système de commande électrique / électronique selon une des revendications 1 à 8 et **présentant les caractéristiques suivantes :** la chaîne d'acteurs comprend au moins un acteur du type d'acteur (A, B, C) par l'intermédiaire duquel le flux de données (D) est traité (technique des signaux) avant sa retransmission à l'acteur immédiatement consécutif.

10. Système de commande électrique / électronique selon une des revendications 1 à 9 et **présentant les caractéristiques suivantes :** au moins une partie de l'alimentation électrique des acteurs raccordés du type d'acteur (A, B, C) est assurée directement par l'intermédiaire du module de commande (3) à partir d'une source électrique.

11. Système de commande électrique / électronique selon une des revendications 1 à 10 et **présentant les caractéristiques suivantes :** pour l'alimentation électrique des acteurs du type (A, B, C), au moins une dérivation d'alimentation (6) raccordée à une source électrique est intégrée dans au moins une chaîne d'acteurs.

12. Système de commande électrique / électronique selon une des revendications 1 à 11 et **présentant les caractéristiques suivantes :** au moins un acteur du type (A, B, C) dispose de sa propre alimentation électrique.

13. Système de commande électrique / électronique selon une des revendications 1 à 12 et **présentant les caractéristiques suivantes :** au module de commande (3) est affecté au moins un convertisseur (7) qui est relié à au moins un autre système de commande à bus (EIB, DMX, LAN, etc.).

14. Système de commande électrique / électronique selon la revendication 13 **présentant les caractéristiques suivantes :** à au moins un convertisseur (7) sont reliés au moins deux modules de commande (3).

15. Système de commande électrique / électronique selon une des revendications 1 à 14 et **présentant les caractéristiques suivantes :** en ce qui concerne son premier paquet de données (P), le flux de données (D) comporte la marque initiale caractéristique (S).
